(19) Europäisches Patentamt
European Patent Office
Office européen des brevets

(11) EP 1 354 904 A1

(12) EUROPEAN PATENT APPLICATION
published in accordance with Art. 158(3) EPC

(43) Date of publication:
22.10.2003 Bulletin 2003/43

(21) Application number: 01273185.7

(22) Date of filing: 18.12.2001

(51) Int Cl.[7]: C08G 59/02, C08G 59/24, C08G 59/14, C09D 163/00

(86) International application number:
PCT/JP01/11075

(87) International publication number:
WO 02/055578 (18.07.2002 Gazette 2002/29)

(84) Designated Contracting States:
AT BE CH CY DE DK ES FI FR GB GR IE IT LI LU MC NL PT SE TR

(30) Priority: 10.01.2001 JP 2001002799

(71) Applicant: KANSAI PAINT CO., LTD.
Amagasaki-shi Hyogo 661-0964 (JP)

(72) Inventors:
- YOKOI, Hideo
Hiratsuka-shi, Kanagawa 254-0017 (JP)
- INOMATA, Keiji
Hiratsuka-shi, Kanagawa 254-0071 (JP)
- HIROSE, Yuji
Hiratsuka-shi, Kanagawa 254-0016 (JP)
- NISHIDA, Reiziro
Chigasaki-shi, Kanagawa 253-0082 (JP)

(74) Representative: Hucker, Charlotte Jane
Gill Jennings & Every
Broadgate House,
7 Eldon Street
London EC2M 7LH (GB)

# (54) EPOXY RESIN, COATING COMPOSITION, AND METHOD OF CAN INSIDE COATING

(57) The present invention provides a coating composition comprising: an epoxy resin (C) having a number average molecular weight of 2,500 to 30,000 and an epoxy equivalent of 1,500 to 20,000 g/equiv., and obtainable by reacting a specific low-molecular-weight novolak epoxy resin (A) with a specific low-molecular-weight novolak phenol resin (B); or a neutralized product of a carboxyl-containing acrylic-modified epoxy resin (H) obtainable by reacting the epoxy resin (C) with a carboxyl-containing acrylic resin (G). Also provided is a method for coating the inner surface of a can using the coating composition.

EP 1 354 904 A1

## Description

### TECHNICAL FIELD

The present invention relates to a novel epoxy resin, coating composition and method for coating the inner surface of a can.

### BACKGROUND ART

Conventionally, coating compositions comprising a bisphenol A epoxy resin and a phenol resin curing agent are used for coating the inner surfaces of cans, such as food cans.
However, the conventional coating compositions have the problem of leaching of bisphenol A, an environmental hormone, from the resulting coating films.
Accordingly, there has been a strong demand for the development of a coating composition which is capable of forming a coating film free of bisphenol A leaching, and which is thus suitable for coating the inner surface of a can.

### DISCLOSURE OF THE INVENTION

Objects of the present invention are to provide an epoxy resin which is capable of forming a coating film comparable in processability, adhesion and flavor preservability to a coating film formed using a bisphenol A epoxy resin, but contains no bisphenol A; a coating composition comprising the epoxy resin; and a method for coating the inner surface of a can using the coating composition.
Other objects and features of the invention will become apparent from the following description.
The present inventors conducted extensive research, and found that the above objects can be achieved by using a novel epoxy resin obtained by reacting a specific low-molecular-weight novolak epoxy resin with a specific low-molecular-weight novolak phenol resin. The invention has been accomplished based on this finding.
The invention provides the following epoxy resins, coating compositions and methods for coating the inner surfaces of cans.

1. An epoxy resin having a number average molecular weight of 2,500 to 30,000 and an epoxy equivalent of 1,500 to 20,000 g/equiv., and obtainable by reacting a low-molecular-weight novolak epoxy resin (A) containing at least 70 wt.% of the compound represented by Formula (1) with a low-molecular-weight novolak phenol resin (B) containing at least 75 wt.% of the compound represented by Formula (2):

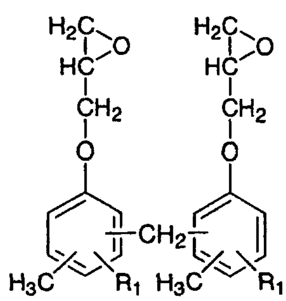
(1)

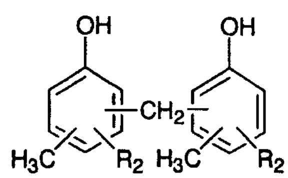
(2)

wherein $R_1$ and $R_2$ each represent hydrogen or methyl, provided that either or both of $R_1$ and $R_2$ represent methyl.
2. The epoxy resin according to Item 1, wherein the compound of Formula (1) contains at least 70 wt.% of the compound represented by Formula (3) and the compound of Formula (2) contains at least 70 wt.% of the compound represented by Formula (4):

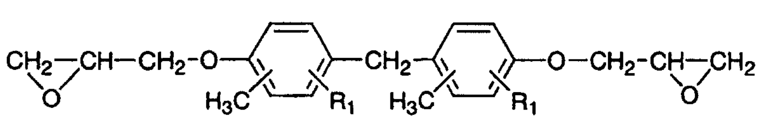
(3)

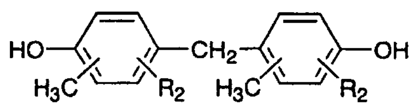

(4)

3. A coating composition comprising an epoxy resin (C) according to Item 1 or 2 and a curing agent (F) which is at least one member selected from the group consisting of a phenol resin (D) obtainable by reacting a phenol other than bisphenol A with formaldehyde and an amino resin (E); the proportions by weight of the epoxy resin (C) and the curing agent (F) on a solids basis being 60 to 98 wt.% of the component (C) and 40 to 2 wt.% of the component (F), relative to the combined weight of the two components.

4. An aqueous coating composition comprising a carboxyl-containing acrylic-modified epoxy resin (H) obtainable by reacting an epoxy resin (C) according to Item 1 or 2 with a carboxyl-containing acrylic resin (G), the epoxy resin (H) being neutralized and dispersed in an aqueous medium.

5. The aqueous coating composition according to Item 4, further containing, per 100 parts by weight of the carboxyl-containing acrylic-modified epoxy resin (H), 25 parts by weight or less of a curing agent (F) which is at least one member selected from the group consisting of a phenol resin (D) obtainable by reacting a phenol other than bisphenol A with formaldehyde and an amino resin (E).

6. A method for coating the inner surface of a can, comprising the steps of applying a coating composition according to any one of Items 3 to 5 to the inner surface of a formed can and baking the coating.

7. A method for coating the inner surface of a can, comprising the steps of applying a coating composition according to any one of Items 3 to 5 to a metal plate, baking the coating and forming the plate into a can in such a manner that the surface of the cured coating film on the metal plate becomes the inner surface of the can.

The following is a more detailed description of the epoxy resin, coating composition and method for coating the inner surface of a can according to the invention.

<u>High-molecular-weight epoxy resin (C)</u>

The high-molecular-weight epoxy resin (C) of the invention is obtained by reacting a low-molecular-weight novolak epoxy resin (A) with a low-molecular-weight novolak phenol resin (B).

Generally available novolak epoxy resins have the structure represented by Formula (5) wherein m is usually in the range of 0 to 4 and may therefore contain a number of epoxy groups per molecule.

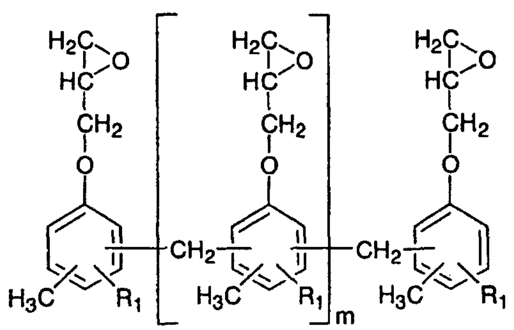

(5)

In Formula (5), $R_1$ is hydrogen or methyl.

Generally available novolak phenol resins have the structure represented by Formula (6) wherein n is usually in the range of 0 to 4 and may therefore contain a number of phenolic hydroxyl groups per molecule.

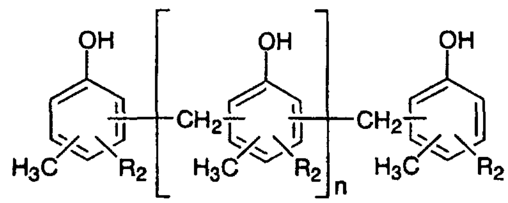

(6)

In Formula (6), $R_2$ is hydrogen or methyl.

Ideally, the high-molecular-weight epoxy resin (C) is prepared by subjecting a compound of Formula (1) having two epoxy groups and two benzene nuclei per molecule, which is a compound of Formula (5) wherein m is 0, and a compound of Formula (2) having two phenolic hydroxyl groups and two benzene nuclei per molecule, which is a compound of Formula (6) wherein n is 0, to the polyaddition reaction shown in the following reaction scheme.

<Reaction Scheme>

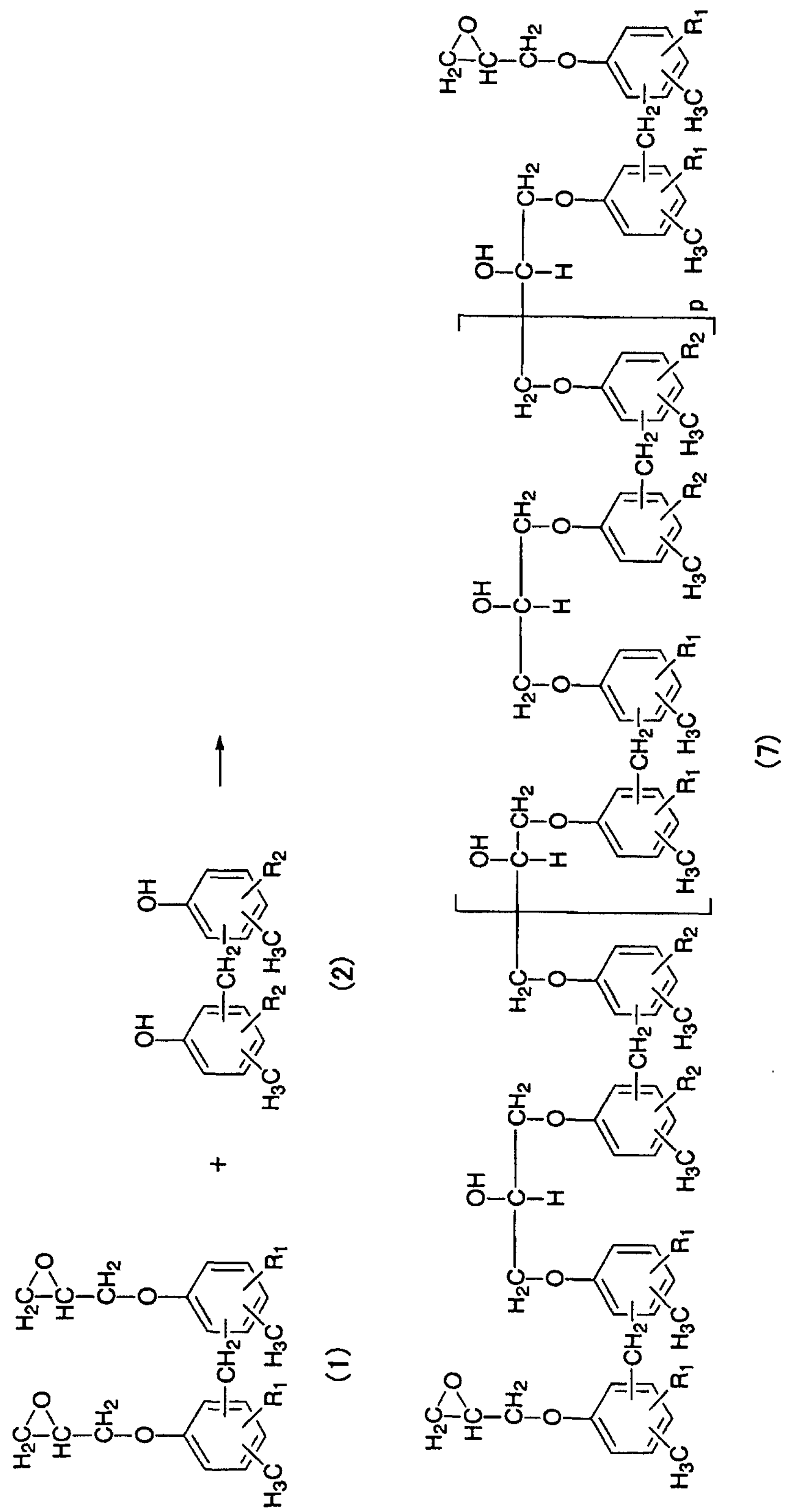

(1) (2) (7)

In the reaction scheme, the product high-molecular-weight epoxy resin (C) is represented by Formula (7). In Formula (7), $R_1$ and $R_2$ each represent hydrogen or methyl, provided that either or both of $R_1$ and $R_2$ are methyl; and p is an integer of 2 to 50.

It is difficult to commercially obtain the compounds of Formulas (1) and (2) in pure forms at low cost. Thus, commercially available compounds of Formulas (5) and (6) usually contain a component having one or at least three benzene nuclei.

In the invention, it is desirable to use the compound of Formula (5) containing a large proportion of a binuclear compound wherein m is 0 and the compound of Formula (6) containing a large proportion of a binuclear compound wherein n is 0, for the reaction of the low-molecular-weight novolak epoxy resin (A) with the low-molecular-weight novolak phenol resin (B) to produce the high-molecular-weight epoxy resin.

Therefore, in practice, the high-molecular-weight epoxy resin (C) is prepared by reacting the low-molecular-weight novolak epoxy resin (A) containing at least 70 wt.%, preferably at least 80 wt.%, of the binuclear compound represented by Formula (1), with the low-molecular-weight novolak phenol resin (B) containing at least 75 wt.%, preferably at least 85 wt.%, of the binuclear compound represented by Formula (2).

In the following Formulas (1) and (2), either or both of $R_1$ and $R_2$ are methyl. Accordingly, at least one of the low-molecular-weight novolak epoxy resin and low-molecular-weight novolak phenol resin is a xylenol novolak resin. Use of such resins is suitable for increasing the hardness of the resulting coating film.

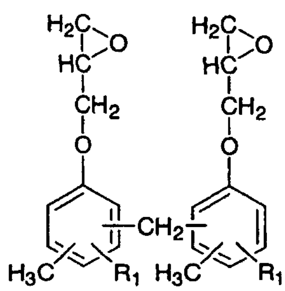 (1)

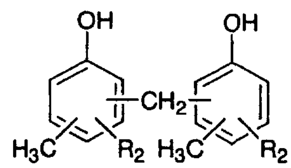 (2)

Further, from the viewpoints of the processability, corrosion resistance and other properties of the resulting coating film, it is suitable that the compound of Formula (1) in the low-molecular-weight novolak epoxy resin (A) contain at least 70 wt.%, preferably at least 85 wt.%, of the 4,4'-substituted compound represented by Formula (3), and the compound of Formula (2) in the low-molecular-weight novolak phenol resin (B) contain at least 70 wt.%, preferably at least 85 wt.%, of the 4,4'-substituted compound represented by Formula (4).

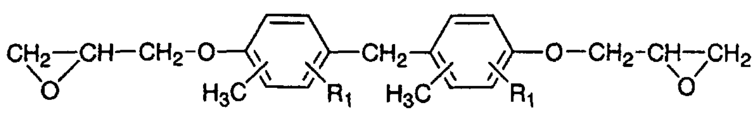 (3)

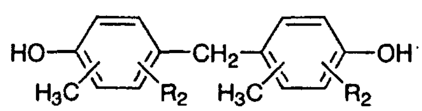 (4)

The reaction of the low-molecular-weight novolak epoxy resin (A) with the low-molecular-weight novolak phenol resin (B) can be carried out without a solvent, but it is usually desirable to carry out the reaction in an organic solvent. The reaction temperature is preferably 120 to 200°C, more preferably 130 to 170°C. Any organic solvent can be used without limitation as long as it is capable of dissolving or dispersing the starting materials and does not greatly inhibit the reaction. Examples of such solvents include hydrocarbon solvents, ketone solvents, ether solvents, ester solvents and various other organic solvents.

Preferably, in the reaction, the ratio of the two components is such that the amount of the epoxy groups in the epoxy resin (A) is 0.7 to 1.4 moles, more preferably 0.95 to 1.15 moles, per 1 mole of phenolic hydroxyl groups in the phenol resin (B).

A catalyst can be used to accelerate the reaction. Usable catalysts include tetraethylammonium bromide,

tetramethylammonium chloride, tetramethylammonium hydroxide, caustic soda, sodium carbonate, tributylamine, dibutyltin oxide and the like. The amount of the catalyst to be used is preferably 10,000 ppm or less relative to the combined amount of the resins (A) and (B).

It is suitable that the high-molecular-weight epoxy resin obtained by the reaction have a number average molecular weight of 2,500 to 30,000, preferably 3,000 to 13,000, from the viewpoints of the flavor preservability, processability, corrosion resistance, etc. Further, it is appropriate that the high-molecular-weight epoxy resin have an epoxy equivalent of 1,500 to 20,000 g/equiv., preferably 2,000 to 9,000 g/equiv., from the viewpoint of the reactivity with the curing agent.

The high-molecular-weight epoxy resin (C) of the invention, when combined with the curing agent (F), exhibits excellent performance, especially as a coating composition for the inner and outer surfaces of cans. For example, when the curing agent (F) is a phenol resin (D) obtained by reacting a phenol other than bisphenol A with formaldehyde, an amino resin (E) or the like, a coating composition comprising the curing agent (F) and the high-molecular-weight epoxy resin (C) is capable of forming a coating film free of leaching of bisphenol A. Further, such a coating composition is sufficiently substitutable for bisphenol A epoxy resin coating compositions conventionally used for the inner surfaces of cans.

Moreover, an aqueous coating composition containing no bisphenol A and having a low organic solvent content can be obtained by neutralizing and dispersing in an aqueous medium a carboxyl-containing acrylic-modified epoxy resin (H) prepared by reacting the high-molecular-weight epoxy resin (C) with a carboxyl-containing acrylic resin (G).

The curing agent (F) to be used in combination with the high-molecular-weight epoxy resin (C) is described below.

<u>Curing agent (F)</u>

The curing agent (F) for use in the invention is at least one member selected from the group consisting of a phenol resin (D) obtained by reacting a phenol other than bisphenol A with formaldehyde and an amino resin (E).

Any phenol other than bisphenol A and free of food hygiene problems can be suitably used as the phenol for preparing the phenol resin (D). Examples of such phenols include phenols having one benzene ring per molecule, such as phenol, methylphenol, ethylphenol, n-propylphenol, isopropylphenol, n-butylphenol, p-tert-butylphenol, p-tert-amylphenol, o-cresol, m-cresol, p-cresol, p-cyclohexylphenol, p-octylphenol and xylenol; phenols having two benzene rings per molecule, such as phenyl o-cresol, p-phenylphenol, bisphenol F, 1,1-bis(4-hydroxyphenyl)ethane, 2,2-bis (4-hydroxyphenyl)butane, bis(4-hydroxyphenyl)-1,1-isobutane, bis(4-hydroxy-tert-butyl-phenyl)-2,2-propane, p-(4-hydroxyphenyl)phenol, oxybis(4-hydroxyphenyl), sulfonylbis(4-hydroxyphenyl) and 4,4'-dihydroxybenzophenone; bis (2-hydroxynaphthyl)methane; and the like.

Preferred among these phenols are those having one benzene ring per molecule, among which phenol, n-butylphenol, p-tert-butylphenol, o-cresol, m-cresol, p-cresol, xylenol and the like are more preferred.

The reaction of the phenol with formaldehyde to obtain the phenol resin (D) can be carried out according to the phenol resin producing reaction known per se. This reaction may be performed in the presence of a solvent and/or a reaction catalyst, as required.

The phenol resin (D) may be a resol phenol resin or a novolak phenol resin, but preferably a resol phenol resin.

Preferred examples of the amino resin (E) include methylolated amino resins obtained by reacting an aldehyde with an amino compound, such as melamine, urea, benzoguanamine, acetoguanamine, steroguanamine, spiroguanamine or dicyandiamide; and resins obtained by alkyl-etherifying the methylolated amino resins with an alcohol. As the amino resin, especially preferable is a methylolated melamine resin in which at least part of the methylol groups are alkyl-etherified.

Examples of aldehydes include formaldehyde, paraformaldehyde, acetaldehyde, benzaldehyde and the like. Examples of alcohols usable for the alkyl-etherification of methylol groups include methyl alcohol, ethyl alcohol, n-propyl alcohol, i-propyl alcohol, n-butyl alcohol, i-butyl alcohol, 2-ethylbutanol, 2-ethylhexanol and the like.

A curing catalyst can be used in combination with the curing agent (F) selected from the phenol resin (D) and the amino resin (E). Preferred examples of curing catalysts include phosphoric acid, sulfonic acid compounds, amine-neutralized sulfonic acid compounds and the like.

Typical examples of sulfonic acid compounds include p-toluenesulfonic acid, dodecylbenzene sulfonic acid, dinonylnaphthalene sulfonic acid, dinonylnaphthalene disulfonic acid and the like. The amine in the amine-neutralized sulfonic acid compounds may be a primary, secondary or tertiary amine.

In the coating composition of the invention, the proportions by weight of the high-molecular-weight epoxy resin (C) and the curing agent (F) on a solids basis should be 60 to 98 wt.% of the component (C) and 40 to 2 wt.% of the component (F), relative to the combined weight of the two components, in view of the curability of the coating composition, the processability, water resistance, corrosion resistance and flavor preservability of the coating film, etc. Preferably, the proportions by weight are 70 to 95 wt.% of the component (C) and 30 to 5 wt.% of the component (F).

Carboxyl-containing acrylic-modified epoxy resin (H)

In the invention, the carboxyl-containing acrylic-modified epoxy resin (H) obtained by reacting the high-molecular-weight epoxy resin (C) with the carboxyl-containing acrylic resin (G) is neutralized and dispersed in an aqueous medium, so that an aqueous coating composition useful for coating the inner surface of a can can be obtained.
The carboxyl-containing acrylic resin (G) for use in the invention is an acrylic polymer comprising, as an essential monomer component, a polymerizable unsaturated carboxylic acid, such as acrylic acid, methacrylic acid, itaconic acid or fumaric acid. It is desirable that the polymer have a resin acid value of 100 to 500 mgKOH/g, from the viewpoints of the stability in an aqueous medium, the processability, corrosion resistance and water resistance of the resulting coating film, etc.
The carboxyl-containing acrylic resin (G) can be prepared by polymerizing the polymerizable unsaturated carboxylic acid and other monomer components.
Examples of the monomer components other than the polymerizable unsaturated carboxylic acid include $C_1$ to $C_{18}$ alkyl esters of acrylic or methacrylic acid, such as methyl (meth)acrylate, ethyl (meth)acrylate, propyl (meth) acrylate, n-butyl (meth)acrylate, i-butyl (meth)acrylate, t-butyl (meth)acrylate, 2-ethylhexyl (meth)acrylate, lauryl (meth) acrylate, stearyl (meth)acrylate and cetyl (meth)acrylate; hydrocarbon ring-containing polymerizable unsaturated monomers, such as benzyl (meth)acrylate, cyclohexyl (meth)acrylate, isobornyl (meth)acrylate, styrene, $\alpha$-methylstyrene and vinyltoluene; hydroxyl-containing polymerizable unsaturated monomers such as 2-hydroxyethyl (meth)acrylate, hydroxypropyl (meth)acrylate, hydroxybutyl (meth)acrylate, hydroxyamyl (meth)acrylate, hydroxyhexyl (meth)acrylate and like hydroxyalkyl (meth)acrylates, and hydroxyl-containing caprolactone-modified alkyl (meth)acrylates obtained by the ring opening addition reaction of 1 to 5 moles of $\varepsilon$-caprolactone with 1 mole of a hydroxyalkyl (meth)acrylate; acrylamide monomers such as acrylamide, methacrylamide, N-methoxymethyl (meth)acrylamide, N-ethoxymethyl (meth)acrylamide, N-n-propoxymethyl (meth)acrylamide, N-isopropoxymethyl (meth)acrylamide, N-n-butoxymethyl (meth)acrylamide, N-sec-butoxymethyl (meth)acrylamide and N-tert-butoxymethyl (meth)acrylamide; acrylonitrile, methacrylonitrile, vinyl acetate, ethylene, butadiene and the like.
The carboxyl-containing acrylic resin (G) can be obtained by heating and copolymerizing a mixture of the polymerizable unsaturated carboxylic acid and other monomer components at 80 to 150°C for about 1 to about 10 hours, for example, in an organic solvent, in the presence of a radical polymerization initiator or a chain transfer agent.
As the radical polymerization initiator, an organic peroxide initiator, an azo initiator or the like is usable. Examples of organic peroxide initiators include benzoyl peroxide, t-butylperoxy-2-ethylhexanoate, di-t-butylperoxide, t-butylperoxy benzoate, t-amylperoxy-2-ethylhexanoate and the like. Examples of azo initiators include azobisisobutyronitrile, azobisdimethylvaleronitrile and the like.
Examples of chain transfer agents include $\alpha$-methylstyrene dimer, mercaptans and the like.
The high-molecular-weight epoxy resin (C) is reacted with the carboxyl-containing acrylic resin (G) to obtain the carboxyl-containing acrylic-modified epoxy resin (H).
The reaction of the high-molecular-weight epoxy resin (C) with the carboxyl-containing acrylic resin (G) is carried out usually in an organic solvent, for example in the presence of a tertiary amine, such as triethylamine or dimethylethanolamine, at about 80 to about 120°C for about 0.5 to about 8 hours. In this manner, the carboxyl-containing acrylic-modified epoxy resin (H) can be preferably obtained.
The ratio of the high-molecular-weight epoxy resin (C) and the carboxyl-containing acrylic resin (G) in the above reaction can be suitably selected according to the intended application workability and film performance of the resulting composition. Usually, the epoxy resin (C)/acrylic resin (G) weight ratio on a solids basis is preferably 60/40 to 90/10, more preferably 70/30 to 90/10.
It is appropriate that the carboxyl-containing acrylic-modified epoxy resin (H) obtained by the above reaction have an acid value of 15 to 200 mgKOH/g from the viewpoints of the dispersion stability in an aqueous medium, the water resistance of the resulting coating film, etc. Also, it is desirable that the epoxy resin (H) contain substantially no epoxy group, considering the storage stability.
The carboxyl-containing acrylic-modified epoxy resin (H) is neutralized and dispersed in an aqueous medium, to thereby obtain an aqueous coating composition.
Neutralizers useful for the neutralization include, for example, amines and ammonia. Suitable examples of amines include triethylamine, triethanolamine, dimethylethanolamine, diethylethanolamine, morpholine and the like, among which triethylamine and dimethylethanolamine are especially preferable.
The degree of neutralization of the carboxyl-containing acrylic-modified epoxy resin (H) is not limited, but neutralization with 0.3 to 1.0 equivalent of the neutralizer per carboxyl group in the resin is usually preferable.
The aqueous medium in which the carboxyl-containing acrylic-modified epoxy resin (H) is dispersed may be water alone, and may be a mixture of water and an organic solvent. The organic solvent may be any known organic solvent as long as it does not adversely affect the stability of the epoxy resin (H) in an aqueous medium and is miscible with water.

Preferred water-miscible organic solvents include alcohol solvents, cellosolve solvents, carbitol solvents and the like. Specific examples of these organic solvents include n-butanol and like alcohol solvents; ethylene glycol monomethyl ether, ethylene glycol monoisopropyl ether, ethylene glycol monobutyl ether and like cellosolve solvents; diethylene glycol monoethyl ether and like carbitol solvents; propylene glycol monomethyl ether; and the like. Also, an inert organic solvent immiscible with water can be used in combination with a water-miscible organic solvent, within a range that does not adversely affect the stability of the epoxy resin (H) in the aqueous medium. Examples of usable inert organic solvents include aromatic hydrocarbon solvents such as toluene and xylene; ester solvents such as ethyl acetate and butyl acetate; ketone solvents such as methyl ethyl ketone; and the like. The amount of the organic solvent in the aqueous coating composition is preferably 50 wt.% or less in the aqueous medium, from the viewpoint of environmental protection.

The carboxyl-containing acrylic-modified epoxy resin (H) can be neutralized and dispersed in an aqueous medium in a routine manner. For example, the modified epoxy resin (H) is gradually added with stirring to the aqueous medium containing a neutralizer; or the modified epoxy resin (H) is neutralized with a neutralizer, followed by addition of an aqueous medium to the neutralization product with stirring or by addition of the neutralization product to an aqueous medium with stirring.

The aqueous coating composition of the invention may further contain a curing agent, in addition to the neutralized carboxyl-containing acrylic-modified epoxy resin (H). Suitable as the curing agent is the above-mentioned curing agent (F) which is at least one member selected from the group consisting of the phenol resin (D) obtained by reacting a phenol other than bisphenol A with formaldehyde and the amino resin (E). The proportion of the curing agent (F) to the carboxyl containing acrylic-modified epoxy resin (H) is preferably 25 parts by weight or less, more preferably 10 to 0.5 parts by weight, per 100 parts by weight of the modified epoxy resin (H), from the viewpoints of the curability of the coating composition, the processability, water resistance, corrosion resistance and flavor preservability of the resulting coating film, etc.

The above organic solvent-based or aqueous coating composition may contain, as required, organic solvents and known coating additives, such as coating surface modifiers, waxes, coloring pigments, extender pigments, modifier resins and anti-foaming agents. The anti-foaming agents prevent foaming of the coating during heating for baking, and may be, for example, benzoin.

Method for coating the inner surface of a can

Next, the method for applying the coating composition is described.

The coating composition may be applied either by a method comprising applying the organic solvent-based or aqueous coating composition to the inner surface of a formed can by spray coating or like coating process, and baking the coating (coating method I); or by a method comprising applying the coating composition to a metal plate by roll coater coating, curtain flow coater coating or like coating process, baking the coating, and forming the plate into a can in such a manner that the cured coating film surface becomes the inner surface of the can (coating method II).

It is suitable that the cured coating film have a thickness of about 2 to about 20 μm, preferably 5 to 15 μm. The conditions for baking the coating are not limited and may be any conditions that cure the coating. Usually, the coating is baked at about 140 to about 350°C for about 7 to about 180 seconds to thereby form a cured coating film.

The can for use in coating method I is prepared, for example, by forming into a can a metal plate such as an untreated steel plate, a tin-plated steel plate, a galvanized steel plate, a chromium-plated steel plate, a phosphate-treated steel plate, a chromate-treated steel plate, an untreated aluminum plate or a chromate-treated aluminum plate. The metal plate for use in coating method II may be one of the above metal plates, i.e., materials for preparing the can.

The coating film obtained from the coating composition of the invention is free of leaching of bisphenol A. Further, the coating film is comparable in processability, adhesion and flavor preservability to coating films obtained from coating compositions containing a bisphenol A epoxy resin. Therefore, the coating composition of the invention is extremely useful for coating the inner surfaces of cans.

BEST MODE FOR CARRYING OUT THE INVENTION

The following Examples and Comparative Examples illustrate the invention in further detail. In these examples, parts and percentages are all by weight.

Production of low-molecular-weight novolak epoxy resin (A)

Production Example 1

A low-molecular-weight xylenol novolak phenol resin (tradename "TM-BPF", product of Honshu Chemical

Industry Co., Ltd., binuclear compound purity: 95%, 4,4'-substituted compound content in the binuclear compound: 95%) (256 parts) and epichlorohydrin (833 parts) were placed in a reaction vessel equipped with a stirrer, a thermometer, a dropping funnel, and a unit for coagulating and separating an epichlorohydrin/water azeotrope and returning the epichlorohydrin layer (the lower layer) to the reaction vessel. The resulting solution was heated to 119°C under reflux with stirring.

While maintaining the content of the vessel at 99 to 119°C, 203 parts of a 40% aqueous NaOH solution was added dropwise over about 3 hours. Of the water and epichlorohydrin distilled during the reaction, only the epichlorohydrin was returned to the reaction vessel. After completion of the addition of the aqueous NaOH solution, excess epichlorohydrin was collected under reduced pressure. Subsequently, 1,000 parts of toluene was added, and the resulting mixture was washed with 1,000 parts of water three times to remove the produced sodium chloride and residual alkali. Then, while heating the mixture to the final temperature of 170°C, toluene was removed under reduced pressure, giving a low-molecular-weight xylenol novolak epoxy resin. The resin had an epoxy equivalent of 205 g/equiv. and a binuclear compound purity of 95%. The binuclear compound had a 4,4'-substituted compound content of 95%.

Production Example 2

A low-molecular-weight cresol novolak phenol resin (tradename "BisOC-F", product of Honshu Chemical Industry Co., Ltd., binuclear compound purity: 90%, 4,4'-substituted compound content in the binuclear compound: 90%) (228 parts) and epichlorohydrin (833 parts) were placed in a reaction vessel equipped with a stirrer, a thermometer, a dropping funnel, and a unit for coagulating and separating an epichlorohydrin/water azeotrope and returning the epichlorohydrin layer (the lower layer) to the reaction vessel. The resulting solution was heated to 119°C under reflux with stirring.

While maintaining the content of the vessel at 99 to 119°C, 203 parts of a 40% aqueous NaOH solution was added dropwise over about 3 hours. Of the water and epichlorohydrin distilled during the reaction, only the epichlorohydrin was returned to the reaction vessel. After completion of the addition of the aqueous NaOH solution, excess epichlorohydrin was recovered under reduced pressure. Subsequently, 1,000 parts of toluene was added, and the resulting mixture was washed with 1,000 parts of water three times to remove the produced sodium chloride and residual alkali. Then, while heating the mixture to the final temperature of 170°C, toluene was removed under reduced pressure, giving a low-molecular-weight cresol novolak epoxy resin. The resin had an epoxy equivalent of 190 g/equiv. and a binuclear compound purity of 90%. The binuclear compound had a 4,4'-substituted compound content of 90%.

<u>Production of carboxyl-containing acrylic resin (G)</u>

Production Example 3

Ethylene glycol monobutyl ether (1,200 parts) was placed in a reaction vessel, and heated to and maintained at 100°C. A mixed solution of methacrylic acid (400 parts), styrene (500 parts), ethyl acrylate (100 parts), "Perbutyl O" (tradename of NOF Corporation, peroxide polymerization initiator) (35 parts) and ethylene glycol monobutyl ether (140 parts) was added dropwise over 3 hours. After completion of the addition, the resulting mixture was aged at 100°C for 2 hours, and then 570 parts of n-butanol was added, giving a carboxyl-containing acrylic resin solution (G1) with a solids content of 36%. The resin had a number average molecular weight of about 7,000 and an acid value of 260 mgKOH/g.

<u>Production of high-molecular-weight epoxy resin (C)</u>

Example 1

Ethylene glycol (111 parts), the low-molecular-weight xylenol novolak epoxy resin obtained in Production Example 1 (640 parts), a low-molecular-weight xylenol novolak phenol resin (tradename "TM-BPF", a product of Honshu Chemical Industry Co., Ltd.) (345 parts) and a 50% aqueous tetramethylammonium chloride solution (1.2 parts) were placed in a reaction vessel, heated to 140°C with stirring and maintained at this temperature for 7 hours, giving an epoxy resin solution (C1) with a solids content of 90%. The resin had an epoxy equivalent of about 2,600 g/equiv. and a number average molecular weight of about 3,800.

Example 2

Ethylene glycol (111 parts), the low-molecular-weight xylenol novolak epoxy resin obtained in Production Example 1 (640 parts), a low-molecular-weight xylenol novolak phenol resin (tradename "TM-BPF", a product of Honshu Chemical Industry Co., Ltd.) (355 parts) and a 50% aqueous tetramethylammonium chloride solution (1.2 parts) were placed in a reaction vessel, heated to 140°C with stirring and maintained at this temperature for 7 hours, giving an epoxy resin solution (C2) with a solids content of 90%. The resin had an epoxy equivalent of about 3,800 g/equiv. and a number average molecular weight of about 5,000.

Example 3

Ethylene glycol (111 parts), the low-molecular-weight xylenol novolak epoxy resin obtained in Production Example 1 (640 parts), a low-molecular-weight xylenol novolak phenol resin (tradename "TM-BPF", a product of Honshu Chemical Industry Co., Ltd.) (370 parts) and a 50% aqueous tetramethylammonium chloride solution (1.2 parts) were placed in a reaction vessel, heated to 140°C with stirring and maintained at this temperature for 7 hours, giving an epoxy resin solution (C3) with a solids content of 90%. The resin had an epoxy equivalent of about 6,000 g/equiv. and a number average molecular weight of about 12,000.

Example 4

Ethylene glycol (111 parts), the low-molecular-weight xylenol novolak epoxy resin obtained in Production Example 1 (640 parts), a low-molecular-weight cresol novolak phenol resin (tradename "BisOC-F", a product of Honshu Chemical Industry Co., Ltd.) (370 parts) and a 50% aqueous tetramethylammonium chloride solution (1.2 parts) were placed in a reaction vessel, heated to 140°C with stirring and maintained at this temperature for 7 hours, giving an epoxy resin solution (C4) with a solids content of 90%. The resin had an epoxy equivalent of about 2,600 g/equiv. and a number average molecular weight of about 3,800.

Example 5

Ethylene glycol (111 parts), the low-molecular-weight cresol novolak epoxy resin obtained in Production Example 2 (640 parts), a low-molecular-weight xylenol novolak phenol resin (tradename "TM-BPF", a product of Honshu Chemical Industry Co., Ltd.) (370 parts) and a 50% aqueous tetramethylammonium chloride solution (1.2 parts) were placed in a reaction vessel, heated to 140°C with stirring and maintained at this temperature for 7 hours, giving an epoxy resin solution (C5) with a solids content of 90%. The resin had an epoxy equivalent of about 2,600 g/equiv. and a number average molecular weight of about 3,800.

Comparative Example 1

Ethylene glycol (111 parts), the low-molecular-weight xylenol novolak epoxy resin obtained in Production Example 1 (640 parts), a low-molecular-weight xylenol novolak phenol resin (tradename "TM-BPF", a product of Honshu Chemical Industry Co., Ltd.) (250 parts) and a 50% aqueous tetramethylammonium chloride solution (1.2 parts) were placed in a reaction vessel, heated to 140°C with stirring and maintained at this temperature for 7 hours, giving an epoxy resin solution (C6) with a solids content of 90%. The resin had an epoxy equivalent of about 800 g/equiv. and a number average molecular weight of about 1,400.

Comparative Example 2

Ethylene glycol (111 parts), the low-molecular-weight xylenol novolak epoxy resin obtained in Production Example 1 (640 parts), a low-molecular-weight xylenol novolak phenol resin (tradename "TM-BPF", a product of Honshu Chemical Industry Co., Ltd.) (385 parts) and a 50% aqueous tetramethylammonium chloride solution (1.2 parts) were placed in a reaction vessel, heated to 140°C with stirring and maintained at this temperature for 7 hours, giving an epoxy resin solution (C7) with a solids content of 90%. The resin had an epoxy equivalent of about 15,000 g/equiv. and a number average molecular weight of about 35,000.

Production of coating composition

Example 6

| | |
|---|---|
| Epoxy resin solution (C1) | 83.3 parts (solids: 75 parts) |

(continued)

| | |
|---|---|
| Hitanol 3305N | 59.5 parts (solids: 25 parts) |
| TOPCO S-923 | 0.1 part |
| Modaflow | 0.15 parts |
| Phosphoric acid | 0.5 parts |
| Methyl ethyl ketone | 51.9 parts |
| Methyl isobutyl ketone | 103.8 parts |
| Xylene | 51.9 parts |
| Butyl cellosolve | 51.9 parts |

The above components were thoroughly mixed and stirred to obtain a coating composition with a solids content of 25%.

Examples 7-21 and Comparative Examples 3-4

Using the components shown in Tables 1 and 2, the procedure of Example 6 was repeated, giving coating compositions with a solids content of 25%.
In Tables 1 and 2, the amounts of the components are expressed in terms of part(s) by weight on a solids basis.
(*1) to (*8) in Tables 1 and 2 mean the following.

(*1) Hitanol 3305N: a tradename of Hitachi Chemical Co., Ltd., a phenol resin solution with a solids content of about 42% obtained by reacting cresol, p-tert-butyl phenol and formaldehyde
(*2) Durite P-97: a tradename of Borden Chemical, Inc., a phenol resin solution with a solids content of about 50% obtained by reacting cresol and formaldehyde
(*3) Varcum 29-101: a tradename of BTL Specialty Resins Corp., a phenol resin with a solids content of 100% obtained by reacting xylenol and formaldehyde
(*4) Tesazine 3003-60: a tradename of Hitachi Kasei Polymer Co., Ltd., a butylated urea resin with a solids content of 60%
(*5) Cymel 303: a tradename of Mitsui-Cytec, Ltd., a methylated melamine resin with a solids content of 100%
(*6) Nacure 5925: a tradename of King Industries, Inc., an amine-neutralized dodecylbenzenesulfonic acid solution with an active ingredient content of 25%
(*7) TOPCO S-923: a tradename of TOYO-PETROLITE, a microcrystalline wax with a solids content of 100%
(*8) Modaflow: a tradename of Monsanto Co. (U.S.A.), surface modifier (acrylic resin oligomer with a solids content of 100%)

Production of aqueous coating compositions

Example 22

The carboxyl-containing acrylic resin solution (G1) obtained in Production Example 3 (556 parts) and ethylene glycol monohexyl ether (40 parts) were added to the high-molecular-weight epoxy resin solution (C2) obtained in Example 2 (889 parts), followed by uniform stirring. Then, 66 parts of dimethylethanolamine was added, and the resulting mixture was maintained at 90°C for 1 hour. Subsequently, 2,450 parts of deionized water was added dropwise over 1 hour, giving an aqueous coating composition (W1), which was an aqueous dispersion of a carboxyl-containing acrylic-modified epoxy resin (H1). The coating composition (W1) had a solids content of 25%, a viscosity of 500 mPa·s and a particle diameter of 200 nm. The modified epoxy resin (H1) had an acid value of 40 mgKOH/g.

Example 23

Hitanol 3305N (100 parts) was added with stirring to 4000 parts of the aqueous coating composition (W1) (an aqueous dispersion) obtained in Example 22, giving an aqueous coating composition (W2).

Example 24

Cymel 303 (50 parts) was added with stirring to 4000 parts of the aqueous coating composition (W1) (an aqueous dispersion) obtained in Example 22, giving an aqueous coating composition (W3).

Example 25

The carboxyl-containing acrylic resin solution (G1) obtained in Production Example 3 (417 parts) and methyl ethyl ketone (200 parts) were added to the high-molecular-weight epoxy resin solution (C3) obtained in Example 3 (944 parts), followed by uniform stirring. Then, 62 parts of dimethylethanolamine was added, and the resulting mixture was maintained at 90°C for 3 hours. Subsequently, 2,340 parts of deionized water was added dropwise over 1 hour, and 1,106 parts of a mixture of water and the organic solvent was removed under reduced pressure with stirring. In this manner, an aqueous coating composition (W4) was obtained which was an aqueous dispersion of a carboxyl-containing acrylic-modified epoxy resin (H2). The coating composition (W4) had a solids content of 35%, a viscosity of 4,000 mPa·s and a particle diameter of 290 nm. The modified epoxy resin (H2) had an acid value of 30 mgKOH/g.

Example 26

Hitanol 3305N (100 parts) was added with stirring to 2857 parts of the aqueous coating composition (W4) (an aqueous dispersion) obtained in Example 25, giving an aqueous coating composition (W5).

Example 27

The carboxyl-containing acrylic resin solution (G1) obtained in Production Example 3 (556 parts) and ethylene glycol monohexyl ether (40 parts) were added to the high-molecular-weight epoxy resin solution (C4) obtained in Example 4 (889 parts), followed by uniform stirring. Then, 66 parts of dimethylethanolamine was added, and the resulting mixture was maintained at 90°C for 1 hour. Subsequently, 2,450 parts of deionized water was added dropwise over 1 hour, giving an aqueous coating composition (W6), which was an aqueous dispersion of a carboxyl-containing acrylic-modified epoxy resin (H3). The coating composition (W6) had a solids content of 25%, a viscosity of 520 mPa·s and a particle diameter of 210 nm. The modified epoxy resin (H3) had an acid value of 40 mgKOH/g.

Comparative Example 5

The carboxyl-containing acrylic resin solution (G1) obtained in Production Example 3 (556 parts) and ethylene glycol monohexyl ether (40 parts) were added to the high-molecular-weight epoxy resin solution (C7) obtained in Comparative Example 2 (889 parts), followed by uniform stirring. Then, 66 parts of dimethylethanolamine was added, and the resulting mixture was maintained at 90°C for 1 hour. Subsequently, 2,450 parts of deionized water was added dropwise over 1 hour, but it was impossible to obtain a stable aqueous dispersion.

Method for preparing test samples

(1) Preparation of coated plates for testing coating surface conditions, gel fraction, processability, water resistance, adhesion, and adhesion after water resistance test

The coating compositions obtained in Examples 6 to 27 and Comparative Examples 3 to 4 were applied to #25 tin plates to a thickness of about 15 μm (when cured) using a bar coater, and cured by baking at 200 to 210°C for 30 seconds to prepare coated plates.

(2) Preparation of two-piece can bodies for testing corrosion resistance and flavor preservability

The coating compositions obtained in Examples 6 to 27 and Comparative Examples 3 to 4 were applied to the inner surfaces of 250 cc two-piece steel cans by hot air spray coating to a thickness of about 15 μm (when cured), and cured by baking at 215°C for 60 seconds to prepare two-piece can bodies.

Test methods

The following methods were employed to test the coating surface conditions, gel fraction, processability, water resistance, adhesion, adhesion after a water resistance test, corrosion resistance and flavor preservability:

Coating surface conditions: The coating surfaces of the coated plates were visually observed and evaluated according to the following criteria.

A: The whole coating surface was smooth and free of bubbles.
B: The whole coating surface was slightly uneven and had small bubbles.

C: The whole coating surface was slightly uneven and had large bubbles.

Gel fraction: The coated plates were placed in flasks. Methyl ethyl ketone was added in an amount of 100 cc/ 100 $cm^2$ of the coated area of the coated plates, and extraction was performed with heating under reflux for 1 hour. Then, the coated plates were taken out, dried at 120°C for 30 minutes and cooled to room temperature. The gel fraction (%) was calculated by the following equation, wherein $W_1$ is the weight of the tin plate before coating, $W_2$ the weight of the coated plate before extraction, and $W_3$ the weight of the coated plate after extraction:

$$\text{Gel fraction (\%)} = \{(W3-W_1)/(W_2-W_1)\} \times 100$$

Processability: The coated plates were bent 180 degrees with the coated side out. Using a specially folded Du Pont impact tester, a 1 kg iron weight having a flat contact surface was dropped onto the bent portion from a height of 50 cm and the length of the resulting crack of the coating film in the bent portion was measured. The results were evaluated according to the following criteria.

A: Less than 5 mm,
B: 5 mm or more but less than 10 mm,
C: 10 mm or more but less than 20 mm,
D: 20 mm or more.

Water resistance: The coated plates were soaked in deionized water at 125°C in an autoclave for 35 minutes. Thereafter, the plates were taken out and the coating films were inspected for blushing. The results were evaluated according to the following criteria.

A: No blushing on the coating film,
B: Slight blushing on the coating film,
C: Considerable blushing on the coating film,
D: Extreme blushing on the coating film.

Adhesion: Eleven lengthwise and eleven crosswise cuts with a spacing of about 1.5 mm were made with a knife on the coating film of each coated plate, to form a checkerboard pattern. A 24-mm wide adhesive cellophane tape was applied to the checkerboard pattern portion, and then forcefully peeled off. The checkerboard pattern portion of the coating film was observed and evaluated according to the following criteria.

A: No peeling of the coating film,
B: Slight peeling of the coating film,
C: Considerable peeling of the coating film,
D: Extreme peeling of the coating film.

Adhesion after water resistance test: The coated plates were soaked in deionized water at 125°C in an autoclave for 35 minutes, and taken out. Then, the adhesion was tested and evaluated in the same manner as in the above adhesion test.

Corrosion resistance: 10% pineapple juice was hot packed into the above-mentioned can bodies at 98°C. The can bodies were seamed and stored at 37°C for 6 months. Thereafter, the cans were opened and inspected for the corrosion of the inner surfaces. The results were evaluated according to the following criteria.

A: No corrosion,
B: Slight corrosion,
C: Considerable corrosion,
D: Extreme corrosion.

Flavor preservability: The can bodies were filled with tap water (250 cc) treated with activated carbon, seamed and sterilized at 125°C for 30 minutes. After storing the cans at 37°C for 6 months, the flavor were tested and evaluated according to the following criteria.

A: No change in flavor,
B: Slight change in flavor,

C: Considerable change in flavor,
D: Extreme change in flavor.

Tables 1 to 3 present the results of the above tests.

Table 1

| | | Example | | | | | | | | |
|---|---|---|---|---|---|---|---|---|---|---|
| | | 6 | 7 | 8 | 9 | 10 | 11 | 12 | 13 | 14 |
| High-molecular-weight epoxy resin | C1 | 75 | 75 | 75 | 75 | 85 | 85 | 85 | 85 | 85 |
| | C2 | | | | | | | | | |
| | C4 | | | | | | | | | |
| | C5 | | | | | | | | | |
| | C6 | | | | | | | | | |
| Hitanol 3305N(*1) | | 25 | 25 | | | 15 | 15 | | | |
| Durite P-97(*2) | | | | 25 | | | | 15 | | |
| Varcum 29-101(*3) | | | | | 25 | | | | 15 | |
| Tesazine 3003-60(*4) | | | | | | | | | | 15 |
| Cymel 303 (*5) | | | | | | | | | | |
| Phosphoric acid | | 0.5 | | 0.5 | 0.5 | 0.5 | | 0.5 | 0.5 | 0.5 |
| Nacure 5925 (*6) | | | 0.5 | | | | 0.5 | | | |
| Topco S923 (*7) | | 0.1 | 0.1 | 0.1 | 0.1 | 0.1 | 0.1 | 0.1 | 0.1 | 0.1 |
| Modaflow (*8) | | 0.2 | 0.2 | 0.2 | 0.2 | 0.2 | 0.2 | 0.2 | 0.2 | 0.2 |
| Coating surface conditions | | A | A | A | A | A | A | A | A | A |
| Gel fraction (%) | | 82 | 81 | 84 | 81 | 82 | 81 | 83 | 79 | 79 |
| Processability | | B | B | B | B | A | A | A | A | A |
| Water resistance | | A | A | A | A | A | A | A | A | A |
| Adhesion | | A | A | A | A | A | A | A | A | A |
| Adhesion after water resistance test | | B | A | B | B | A | A | A | A | A |
| Corrosion resistance | | A | A | A | A | A | A | A | B | B |
| Flavor preservability | | A | A | A | B | A | A | A | B | B |

Table 2

| | | Example | | | | | | | Comp.Ex. | |
|---|---|---|---|---|---|---|---|---|---|---|
| | | 15 | 16 | 17 | 18 | 19 | 20 | 21 | 3 | 4 |
| High-molecular-weight epoxy resin | C1 | 85 | | | | | | | 50 | |
| | C2 | | 80 | 80 | 80 | 80 | | | | |
| | C4 | | | | | | 75 | | | |
| | C5 | | | | | | | 75 | | |
| | C6 | | | | | | | | | 75 |
| Hitanol 3305N(*1) | | | 20 | 20 | | | 25 | 25 | 50 | 25 |
| Durite P-97(*2) | | | | | 20 | | | | | |
| Varcum 29-101(*3) | | | | | | 20 | | | | |
| Tesazine 3003-60(*4) | | | | | | | | | | |
| Cymel 303(*5) | | 15 | | | | | | | | |
| Phosphoric acid | | 0.5 | 0.5 | | 0.5 | 0.5 | 0.5 | 0.5 | 0.5 | 0.5 |
| Nacure 5925(*6) | | | | 0.5 | | | | | | |
| Topco S923(*7) | | 0.1 | 0.1 | 0.1 | 0.1 | 0.1 | 0.1 | 0.1 | 0.1 | 0.1 |
| Modaflow (*8) | | 0.2 | 0.2 | 0.2 | 0.2 | 0.2 | 0.2 | 0.2 | 0.2 | 0.2 |
| Coating surface conditions | | A | A | A | A | A | A | A | A | A |
| Gel fraction (%) | | 90 | 80 | 79 | 82 | 78 | 83 | 81 | 93 | 87 |
| Processability | | A | A | A | A | A | B | B | D | D |
| Water resistance | | A | A | A | A | A | A | A | C | C |
| Adhesion | | A | A | A | A | A | A | A | D | D |
| Adhesion after water resistance test | | A | A | A | A | A | B | B | D | D |
| Corrosion resistance | | B | A | A | A | A | A | A | D | D |
| Flavor preservability | | B | A | A | A | B | A | A | C | C |

Table 3

| | Example | | | | | |
|---|---|---|---|---|---|---|
| | 22 | 23 | 24 | 25 | 26 | 27 |
| Aqueous coating composition No. | W1 | W2 | W3 | W4 | W5 | W6 |
| Coating surface conditions | A | A | A | A | A | A |
| Gel fraction (%) | 95 | 94 | 96 | 93 | 92 | 95 |
| Processability | A | A | B | A | A | A |
| Water resistance | A | A | A | A | A | A |
| Adhesion | A | A | A | A | A | A |
| Adhesion after water resistance test | B | A | B | B | A | A |
| Corrosion resistance | A | A | A | A | A | A |
| Flavor preservability | A | A | B | A | A | A |

Further, the coating compositions obtained in Examples 6 to 27 were applied to the inner surfaces of cans, and cured by baking. The resulting inner surface-coated cans were tested for bisphenol A leaching. All the cans were free of bisphenol A leaching.

## Claims

1. An epoxy resin having a number average molecular weight of 2,500 to 30,000 and an epoxy equivalent of 1,500 to 20,000 g/equiv., and obtainable by reacting a low-molecular-weight novolak epoxy resin (A) containing at least 70 wt.% of the compound represented by Formula (1) with a low-molecular-weight novolak phenol resin (B) containing at least 75 wt.% of the compound represented by Formula (2):

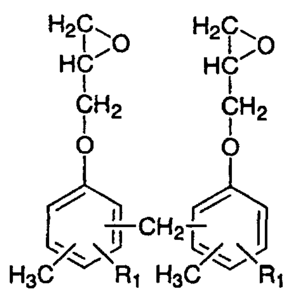
(1)

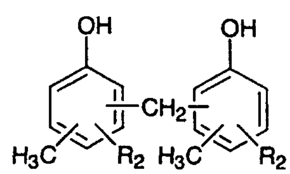
(2)

wherein $R_1$ and $R_2$ each represent hydrogen or methyl, provided that either or both of $R_1$ and $R_2$ represent methyl.

2. The epoxy resin according to Claim 1, wherein the compound of Formula (1) contains at least 70 wt.% of the compound represented by Formula (3) and the compound of Formula (2) contains at least 70 wt.% of the compound represented by Formula (4):

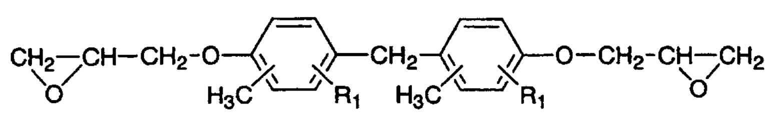
(3)

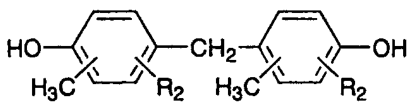

(4)

**3.** A coating composition comprising an epoxy resin (C) according to Claim 1 or 2 and a curing agent (F) which is at least one member selected from the group consisting of a phenol resin (D) obtainable by reacting a phenol other than bisphenol A with formaldehyde and an amino resin (E); the proportions by weight of the epoxy resin (C) and the curing agent (F) on a solids basis being 60 to 98 wt.% of the component (C) and 40 to 2 wt.% of the component (F), relative to the combined weight of the two components.

**4.** An aqueous coating composition comprising a carboxyl-containing acrylic-modified epoxy resin (H) obtainable by reacting an epoxy resin (C) according to Claim 1 or 2 with a carboxyl-containing acrylic resin (G), the epoxy resin (H) being neutralized and dispersed in an aqueous medium.

**5.** The aqueous coating composition according to Claim 4, further containing, per 100 parts by weight of the carboxyl-containing acrylic-modified epoxy resin (H), 25 parts by weight or less of a curing agent (F) which is at least one member selected from the group consisting of a phenol resin (D) obtainable by reacting a phenol other than bisphenol A with formaldehyde and an amino resin (E).

**6.** A method for coating the inner surface of a can, comprising the steps of applying a coating composition according to any one of Claims 3 to 5 to the inner surface of a formed can and baking the coating.

**7.** A method for coating the inner surface of a can, comprising the steps of applying a coating composition according to any one of Claims 3 to 5 to a metal plate, baking the coating and forming the plate into a can in such a manner that the surface of the cured coating film on the metal plate becomes the inner surface of the can.

# INTERNATIONAL SEARCH REPORT

International application No.
PCT/JP01/11075

A. CLASSIFICATION OF SUBJECT MATTER
Int.Cl[7] C08G59/02, C08G59/24, C08G59/14, C09D163/00

According to International Patent Classification (IPC) or to both national classification and IPC

B. FIELDS SEARCHED

Minimum documentation searched (classification system followed by classification symbols)
Int.Cl[7] C08G59/02, C08G59/24, C08G59/14, C09D163/00-10

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| Y | JP, 3-76770, A (Toto Kasei K.K.), 02 April, 1991 (02.04.91), Claims; page 2, upper right column, line 7 to lower left column, line 1; page 2, lower right column, line 20 to page 3, upper left column, line 6; page 3, upper right column, lines 6 to 19; page 4, lower left column, lines 7 to 20 (Family: none) | 1-7 |
| X<br>Y | JP, 7-109328, A (Nippon Steel Chemical Co., Ltd.), 25 April, 1995 (25.04.95), Claims; Par. No. [0003] (Family: none) | 1-2<br>1-7 |
| A | WO, 97/2306, A1 (The Dow Chemical Co.), 23 January, 1997 (23.01.97), Claims & JP 11-508931 A Claims & US 5654382 A | 1-7 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 March, 2002 (04.03.02) | 19 March, 2002 (19.03.02) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP01/11075

C (Continuation). DOCUMENTS CONSIDERED TO BE RELEVANT

| Category* | Citation of document, with indication, where appropriate, of the relevant passages | Relevant to claim No. |
|---|---|---|
| A | EP, 850973, A1 (Tohto Kasei Co., Ltd.),<br>01 July, 1998 (01.07.98),<br>Claims<br>& JP 10-17641 A<br>Claims<br>& WO 98/1494 A1 & US 6046284 A | 1-7 |

Form PCT/ISA/210 (continuation of second sheet) (July 1998)